# DEMANDE DE BREVET EUROPEEN

(11) **EP 1 473 627 A2**
(43) Date de publication de la demande: **03.11.2004**
(21) Numéro de dépôt: 04291092.7
(22) Date de dépôt: 27.04.2004
(51) Int. Cl.: G06F 9/44

(54) **Procédé pour la modélisation de données référentielles et son utilisation pour la localisation de données référentielles dans un système d'informations**

(30) Priorité: 29.04.2003 FR 0305268
(71) Demandeur: FRANCE TELECOM, 75015 Paris (FR)
(72) Inventeur: Simonin, Jacques, 59300 Valenciennes (FR)
(74) Mandataire: Bentz, Jean-Paul

(57) **Abrégé**

L'invention concerne un procédé de modélisation de données référentielles d'un système d'information SI, caractérisé en ce qu'il repose sur une modélisation UML des données référentielles du SI répertoriées dans des gisements de données d'applications du SI, toute donnée référentielle du SI étant définie par un concept spécialisé héritant de caractéristiques d'un concept générique, ledit procédé comprenant les étapes suivantes consistant à :
- regrouper lesdits concepts en catégories selon des critères logiques;
- construire un diagramme de catégories où lesdites catégories sont regroupées selon un typage prédéfini des catégories, lesdites catégories étant liées entre-elles par des relations de dépendance UML contenues chacune dans une donnée référentielle;
- mettre en cohérence les regroupements de concepts génériques dans une même catégorie avec les gisements de données d'applications du SI en appliquant le principe suivant lequel les données référentielles définies par les concepts spécialisés héritant de concepts génériques d'une même catégorie et possédant une spécialisation identique appartiennent obligatoirement au gisement de données d'une unique application;
- définir un sens pour les relations de dépendance UML liant lesdites catégories entre-elles, ledit sens dépendant du typage des catégories et du gisement de la donnée référentielle contenant la relation.

## Description

La présente invention se rapporte à un procédé pour la modélisation des données référentielles d'un système d'information (SI), ainsi qu'à un algorithme, basé sur cette modélisation, permettant la localisation des gisements de données référentielles d'un système d'information.

L'invention concerne donc le domaine des techniques logicielles.

Dans une organisation, un SI est constitué par l'ensemble de tous les éléments qui contribuent au traitement et à la circulation de l'information dans l'organisation (base de données, logiciels d'application, procédures, documentation, etc.), y compris le système informatique proprement dit (unité centrale de traitement, périphériques, système d'exploitation, etc.) Le SI est donc composé des moyens (humains et techniques) nécessaires au stockage et au traitement de l'information d'une organisation.

La modélisation d'un SI intervient dans la phase de conception du SI et consiste à créer une représentation virtuelle des processus des métiers d'une organisation ainsi que des stocks et flux d'informations éclairant ces processus.

Une méthode connue sous le nom de méthode MERISE constitue la méthode de conception d'un système d'information la plus répandue. Il s'agit d'une méthode d'analyse informatique dédiée à l'établissement d'un SI. La méthode MERISE est basé sur la séparation des données et des traitements à effectuer en plusieurs modèles conceptuels et physiques. Parmi ceux-ci, le Modèle Conceptuel de Données ou MCD permet d'établir une représentation claire des données du SI et définit les dépendances fonctionnelles de ces données entre elles. Le MCD a pour but d'écrire de façon formelle les données qui seront utilisées par le SI. Il s'agit donc d'une représentation des données, facilement compréhensible, permettant d'écrire le SI à l'aide d'entités. Une entité est la représentation d'un élément matériel ou immatériel ayant un rôle dans le système que l'on désire décrire. Les entités de même type, c'est-à-dire dont la définition est la même, sont regroupées au sein d'un ensemble appelé classe d'entités. Des liens sémantiques peuvent exister entre plusieurs entités. Aussi, des relations sont définies pour représenter ces liens sémantiques et une classe de relation contient toutes les relations de même type (qui relient donc des entités appartenant à des même classes d'entités).

Cependant, la modélisation des données proposée dans un Modèle Conceptuel de Données issu de la méthode Merise ne permet pas de traduire la notion de référentiel d'une donnée ou d'une relation entre deux données.

Par la notion de données référentielles du SI, on entend des données qui sont produites par une application qui fournit pour ces données les valeurs qui font foi. Cette notion de donnée référentielle est extrêmement importante dans un SI, et notamment dans une optique de créer ou de faire évoluer l'urbanisme d'un SI. En effet, les données sont souvent manipulées au travers de plusieurs applications et voient ainsi leurs valeurs modifiées par les différents acteurs intervenant dans le SI. De plus, un SI, pour rester performant ou améliorer ses services, doit nécessairement progresser au rythme du développement de l'organisation et de l'évolution de sa stratégie. Le travail d'urbanisation consiste alors à définir les grands axes de ces développements et évolutions continuelles et à permettre une interconnexion plus simple entre les différents systèmes et applications du SI.

Aussi, dans ce cadre, la notion de référentiel d'une donnée ou d'une relation entre deux données est très importante pour optimiser l'urbanisation d'un SI. En effet, chaque application d'un SI qui possède, dans son gisement de données, une donnée référentielle doit pouvoir être en mesure de l'offrir à des applications clientes. Cette notion d'offre de données par un fournisseur à des clients impacte bien évidemment l'urbanisme fonctionnel du SI.

Or, le Modèle Conceptuel de Données issu de la méthode Merise ne permet pas de représenter des regroupements homogènes de données ni les relations de dépendance entre ces regroupements, utiles à la représentation de la notion de référentiel. Cette méthode n'autorise pas la construction d'une modélisation à partir des principes basés sur les données référentielles d'un SI et est donc limitée en vue de l'optimisation de la phase d'urbanisme fonctionnel d'un SI.

De plus, la modélisation des données proposée dans un Modèle Conceptuel de Données issu de la méthode Merise est également limitée en ce qu'elle ne permet pas, pour de nouvelles données d'un SI, de localiser les gisements des données référentielles. Il s'agit pourtant là encore d'une caractéristique très importante dans le but d'optimiser l'urbanisation d'un SI.

Aussi, au vu de ce qui précède, un but de la présente invention consiste à proposer une méthode de modélisation des données d'un SI qui pallie les inconvénients de l'art antérieur précités, et notamment qui permet d'obtenir une schématisation de la notion de référentiel d'une relation de dépendance entre deux données et des données elles-mêmes.

Un autre but de la présente invention est de proposer une méthode de localisation des gisements des données référentielles pour de nouvelles données d'un SI, à l'appui des principes de la méthode de modélisation proposée, qui permet de déterminer dans quel gisement de données, c'est-à-dire sous la responsabilité de quelle application, doit se trouver une donnée référentielle.

Pour ce faire, l'invention se propose d'appliquer le concept de modélisation objet UML, acronyme anglo-saxon pour « Unified Modeling language », à la modélisation des données référentielles d'un système d'information.

L'invention concerne donc un procédé de modélisation de données référentielles d'un système d'information, caractérisé en ce qu'il repose sur une modélisation UML des données référentielles du système d'information répertoriées dans des gisements de données d'applications du SI, toute donnée référentielle du système d'information étant définie par un concept spécialisé héritant de caractéristiques d'un concept générique, ledit procédé comprenant les étapes suivantes consistant à :
- regrouper lesdits concepts en catégories selon des critères logiques ;
- construire un diagramme de catégories où lesdites catégories sont regroupées selon un typage prédéfini des catégories, lesdites catégories étant liées entre-elles par des relations de dépendance UML matérialisées chacune dans par une ou plusieurs données référentielles ;
- mettre en cohérence les regroupements de concepts génériques dans une même catégorie avec les gisements de données d'applications du système d'information en appliquant le principe suivant lequel les données référentielles définies par les concepts spécialisés héritant de concepts génériques d'une même catégorie et possédant une spécialisation identique appartiennent obligatoirement au gisement de données d'une unique application ;
- définir un sens pour les relations de dépendance UML liant lesdites catégories entre-elles, ledit sens des relations de dépendance UML dépendant d'une part, du typage des catégories et, d'autre part, du gisement de la donnée référentielle contenant la relation.

Selon une caractéristique de l'invention, le regroupement des catégories selon un typage prédéfini consiste à définir des catégories liées à des flux regroupant des concepts génériques et des concepts spécialisés qui ont un cycle de vie correspondant exactement à celui d'un processus, des catégories liées à des stocks regroupant des concepts génériques et des concepts spécialisés qui changent d'état à la suite de l'activation d'un flux et qui ont un cycle de vie non limité à celui d'un processus, et des catégories de codification regroupant des concepts génériques permettant de référencer des informations liées aux flux ou aux stocks.

De préférence, une relation de dépendance UML entre une catégorie de type flux et une catégorie de type stock est orientée de la catégorie de type flux vers la catégorie de type stock.

De préférence, une relation de dépendance UML entre une catégorie de type flux ou une catégorie de type stock et une catégorie de type codification est orientée de la catégorie de type flux ou de type stock vers la catégorie de type codification.

Dans un mode de réalisation selon lequel deux données référentielles sont en relation, ladite relation se traduisant par une relation de dépendance UML entre les catégories d'appartenance des deux concepts génériques dont les concepts spécialisés correspondant aux dites données référentielles héritent, ladite relation de dépendance UML est orientée en prenant pour origine la catégorie d'appartenance du concept générique correspondant à la donnée référentielle dont le gisement de données comprend la donnée référentielle contenant la relation entre lesdites deux données référentielles.

L'invention concerne également un procédé de localisation de gisements de données référentielles d'un système d'information, caractérisé en ce qu'il comprend une étape de mise en oeuvre d'une modélisation des données référentielles du système d'information selon les principes définis ci-dessus et en ce qu'il comprend les étapes suivantes consistant à : - effectuer un parcours ordonné du diagramme des catégories, et - localiser, pour chacune des catégorie, le gisement des données référentielles associé à ladite catégorie.

Selon un mode de réalisation, le parcours ordonné du diagramme est effectué des catégories de type flux vers les catégories de type codification.

Avantageusement, le procédé comprend les étapes suivantes consistant à :
- pour chaque catégorie de type flux, réitérer les étapes suivantes :
   . localiser le gisement des données référentielles associé à ladite catégorie de type flux;
   . pour chaque catégorie de type stock, cible d'au moins une relation de dépendance d'origine ladite catégorie de type flux, réitérer les étapes suivantes consistant à : - localiser le gisement des données référentielles associé à ladite catégorie de type stock et donner la priorité au choix du gisement des données référentielles associé à ladite catégorie de type flux, et - pour toute autre catégorie de type stock cible d'au moins une relation de dépendance d'origine ladite catégorie de type stock, localiser le gisement des données référentielles associé à ladite autre catégorie de type stock et donner la priorité au choix du gisement des données référentielles associé à ladite catégorie de type stock;
   . pour chaque catégorie de type codification cible d'au moins une relation de dépendance d'origine ladite catégorie de type flux, réitérer les étapes consistant à : - localiser le gisement des données référentielles associé à ladite catégorie de type codification et donner la priorité au choix du gisement des données référentielles associé à ladite catégorie de type flux;
- pour chaque catégorie de type stock, réitérer les étapes suivantes :
   . pour chaque catégorie de type codification cible d'au moins une relation de dépendance d'origine ladite catégorie de type stock, réitérer les étapes suivantes consistant à : - localiser le gisement des données référentielles associé à ladite catégorie de type codification et donner la priorité au choix du gisement des données référentielles associé à ladite catégorie de type stock, et - pour toute autre catégorie de type codification cible d'au moins une relation de dépendance d'origine ladite catégorie de type codification, localiser le gisement des données référentielles associé à ladite autre catégorie de type codification et donner la priorité au choix du gisement des données référentielles associé à ladite catégorie de type codification.

Selon une caractéristique de l'invention, l'étape consistant à localiser le gisement des données référentielles associé à une catégorie consiste à désigner sous la responsabilité de quelle application se trouve les données référentielles liées à ladite catégorie.

D'autres caractéristiques et avantages de l'invention ressortiront plus clairement de la description qui est faite ci-après, à titre indicatif et nullement limitatif, en référence aux figures suivantes dans lesquelles :
- la figure 1 est un schéma utilisant la notation de paquetage UML et illustrant le principe de modélisation des catégories selon la présente invention;
- la figure 2 est un schéma utilisant la notation de paquetage UML et illustrant un exemple d'un diagramme de catégories selon l'invention;
- la figure 3 est un schéma utilisant la notation de paquetage UML et illustrant l'exemple du diagramme de catégories de la figure 2 à un stade de modélisation ultérieur selon l'invention;
- la figure 4 est un schéma utilisant la notation de paquetage UML et illustrant l'exemple du diagramme de catégories orienté suivant le type;
- la figure 5 est un schéma utilisant la notation de paquetage UML et illustrant l'exemple du diagramme de catégories orienté suivant la notion de référentiel des relations de dépendance UML.
- la figure 6 est un schéma utilisant la notation de paquetage UML et illustrant un exemple de diagramme de catégories construit selon les principes de l'invention, pour la mise en oeuvre du procédé de localisation de gisements de données référentielles d'un SI.

UML est donc un outil de modélisation consistant en une approche objet. Aussi, une telle modélisation peut paraître a priori inappropriée lorsque l'on veut manipuler des données, l'approche fonctionnelle étant dans ce cas plus intuitive. C'est justement un principe fort de l'invention d'aller à l'encontre de ce préjugé en appliquant des concepts propres à la notation UML à la modélisation des données référentielles d'un SI.

L'invention vise donc à effectuer une modélisation UML des données d'un SI qui soit cohérente avec l'urbanisme des données référentielles d'un SI. Aussi, dans ce cadre, toute donnée d'un SI peut être interprétée comme l'implémentation d'un concept spécialisé (stéréotype de classe UML). Les concepts spécialisés définis dans un SI héritent d'un concept générique (stéréotype de classe UML). La spécialisation d'un concept générique se trouve alors être caractéristique de l'urbanisme d'un SI.

La spécialisation est une notion liée à l'héritage dans la notation UML. Plus spécifiquement, l'héritage est une relation entre les classes qui permet la définition et la mise en oeuvre d'une classe basée sur d'autres classes existantes. Ainsi, la relation d'héritage permet à une classe de réutiliser les attributs et les méthodes définies pour une classe plus générale.

Par exemple, si l'on se place dans le contexte d'une entreprise on peut définir un concept générique intitulé ligne de commande. Celui-ci peut, dans un premier cas, être spécialisé par la segmentation de marché de la clientèle (entreprise, grand public) ou par la technologie des produits ou services du catalogue commercial de l'entreprise (analogique, numérique, ...).

L'invention se propose d'utiliser avantageusement une possibilité d'UML permettant de réaliser des regroupements homogènes de données. Ainsi, les différents concepts définis sont regroupés en catégories selon des critères logiques. Ces catégories peuvent être représentées grâce à la notion de paquetage UML.

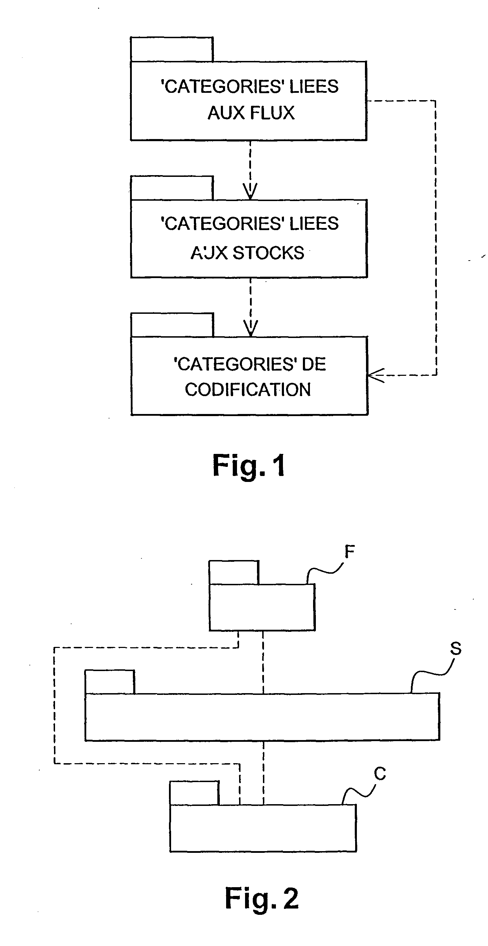

Une caractéristique importante de l'invention consiste alors à construire un diagramme de catégories où les catégories sont regroupées selon un typage prédéfini de ces catégories. Ce typage des catégories d'un SI selon l'invention, et donc des concepts contenus ou des données correspondantes aux concepts spécialisés, est défini comme suit, en relation avec la figure 1 :
Les catégories liées aux flux, qui regroupent des concepts génériques et des concepts spécialisés ayant un cycle de vie correspondant exactement à celui d'un processus (par exemple, des catégories de type *Commande, Facture*) ;
Les catégories liées aux stocks, qui regroupent des concepts génériques et des concepts spécialisés changeant d'état à la suite de l'activation d'un flux et ayant un cycle de vie non limité à celui d'un processus (par exemple, des catégories de type Client, *Parc Commercial Client, Compte client*) ;
Les catégories de codification, qui regroupent des concepts génériques qui permettent de référencer des informations liées aux flux ou aux stocks (par exemple, une catégorie de type *Catalogue Commercial*).

En référence aux figures 2 à 5, un premier mode de réalisation de l'invention est décrit utilisant la modélisation UML des données afin de décrire les données référentielles d'un SI existant et leurs gisements. Dans cet exemple, le SI correspond à celui d'une entreprise, et par gisement de données, on entend tout endroit où se trouve des données qui peuvent constituer une source précieuse sur le plan informationnel, comme les bases de données de l'entreprise, les fichiers, etc...

Ce mode de réalisation de l'invention est celui d'un SI existant dans lequel, pour des raisons d'urbanisme, la description des données référentielles et de leurs gisements est nécessaire.

Le flux étudié dans cet exemple est celui de la commande auprès d'un fournisseur, d'un client ayant déjà un parc commercial pour ce fournisseur et donc un compte chez lui. La commande, comme le parc commercial, sont référencés par un catalogue commercial.

A partir du typage des catégories proposé par la présente invention, on obtient, en référence à la figure 2, une premier diagramme des catégories manipulées :

Une catégorie de type flux F est définie comme étant la catégorie *Commande,* une catégorie de type stock S est définie comme étant la catégorie *Client, Parc Commercial Client et Compte Client,* et une catégorie de type codification C est définie comme étant la catégorie *Catalogue Commercial.*

Les différentes catégories ainsi définies sont liées entre-elles sur le diagramme par des relations de dépendance UML matérialisées chacune par une ou plusieurs données référentielles du SI. Les relations de dépendance UML sont schématisées par les lignes en pointillés sur les figures.

Une fois ce regroupement des catégories par typage effectué, une caractéristique essentielle de l'invention consiste à mettre en cohérence les regroupements de concepts génériques dans une même catégorie avec les gisements de données d'applications du SI. Cette mise en cohérence est définie en appliquant le principe suivant lequel les données référentielles définies par les concepts spécialisés héritant de concepts génériques d'une même catégorie et possédant une spécialisation identique appartiennent obligatoirement au gisement de données d'une et une seule application.

Or, dans notre exemple la catégorie liée aux stocks S contient des concepts spécialisés dont les données référentielles correspondantes appartiennent à des gisements différents dans le SI. Les données référentielles liées au *Client* sont dans une application de gestion des clients du fournisseur, celles liées au *Parc Commercial Client* sont dans des applications de commande spécifiques à la technologie et celles liées au *Compte Client* sont dans une application de facturation.

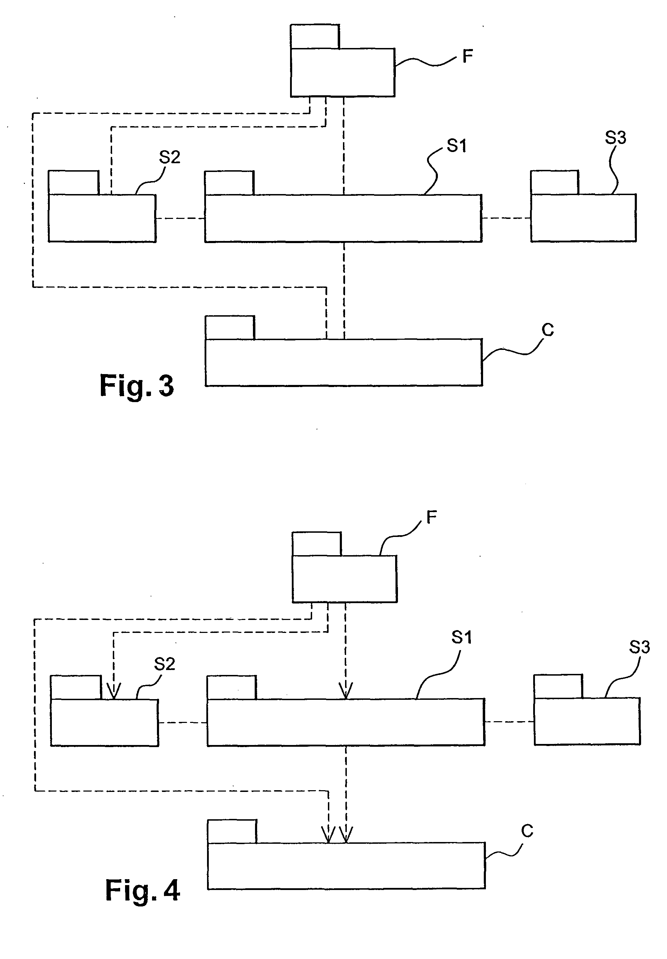

A partir du principe exposé ci-dessus, la définition des catégories devient celle illustrée à la figure 3 :
Une catégorie liée aux flux F : *Commande*
Trois catégories liées aux stocks S1, S2 et S3 : intitulées respectivement *Parc Commercial Client, Client et Compte Client*
Une catégorie de codification C : *Catalogue Commercial.*

Ainsi, selon l'invention, les concepts génériques d'une même catégorie doivent définir des données référentielles appartenant à un même gisement de données, c'est-à-dire au gisement d'une même application.

Une autre étape importante du procédé selon l'invention consiste à définir un sens pour les relations de dépendance UML liant les catégories entre elles. L'orientation des relations entre catégories, jusqu'alors uniquement tributaire des relations entre les données du SI étudié, est d'abord liée au typage de ces catégories.

Ainsi, selon l'invention, l'orientation des relations à partir du typage est défini comme suit : une relation de dépendance UML entre une catégorie de type flux et une catégorie de type stock est orientée de la catégorie de type flux vers la catégorie de type stock, et une relation de dépendance UML entre une catégorie de type flux ou une catégorie de type stock et une catégorie de type codification est orientée de la catégorie de type flux ou de type stock vers la catégorie de type codification.

En suivant ces principes, on obtient le diagramme de catégories orienté de la figure 4. Ainsi, les orientations des relations de dépendance UML ayant comme extrémité la catégorie F de type flux *Commande* représentent cette catégorie de type flux comme origine. Dans ces relations de dépendance avec la catégorie *Commande* prise comme origine, les catégories S1, S2 de type stock, respectivement *Parc Commercial Client* et *Client,* ainsi que la catégorie C de type codification *Catalogue Commercial,* sont des catégories cibles.

De même, la relation de dépendance entre la catégorie S1 *Parc Commercial Client* et la catégorie C *Catalogue Commercial* a pour origine la catégorie de type stock, soit la catégorie S1 *Parc Commercial Client*.

Enfin, le sens ou l'orientation d'une relation de dépendance UML entre des catégories dépend également du gisement de la donnée référentielle contenant la relation.

En effet, si deux données référentielles sont en relation, cette relation est traduite par une relation de dépendance UML entre les catégories d'appartenance des deux concepts génériques dont les concepts spécialisés correspondant aux dites données référentielles héritent. La relation de dépendance UML est alors orientée selon l'invention en prenant pour origine la catégorie d'appartenance du concept générique correspondant à la donnée référentielle dont le gisement de données comprend la donnée référentielle contenant la relation entre les deux données référentielles. En d'autres termes, si la donnée référentielle contenant la relation entre deux données référentielles D1 et D2 est dans le même gisement que la donnée référentielle D1, alors la relation de dépendance entre les concepts génériques correspondants, CG1 pour D1 et CG2 pour D2, est orientée de CG1 vers CG2. Ainsi, c'est l'application où est localisé le gisement de la donnée référentielle D2 qui doit l'offrir, via un service par exemple, à l'application contenant la donnée référentielle D1 dans son gisement et non l'inverse.

La notion de référentiel pour une relation entre données est alors traduite comme une relation de dépendance UML orientée entre concepts génériques sous la responsabilité du concept générique origine de la relation de dépendance. Cette orientation entre les concepts génériques se reporte de façon immédiate entre leurs catégories d'appartenance sous la forme de relations de dépendance orientées dans le même sens. La conséquence pour l'urbanisme d'un SI est de pouvoir décrire, pour un SI existant, ou définir, pour une évolution d'un SI, quelles applications doivent offrir des données aux autres applications du SI.

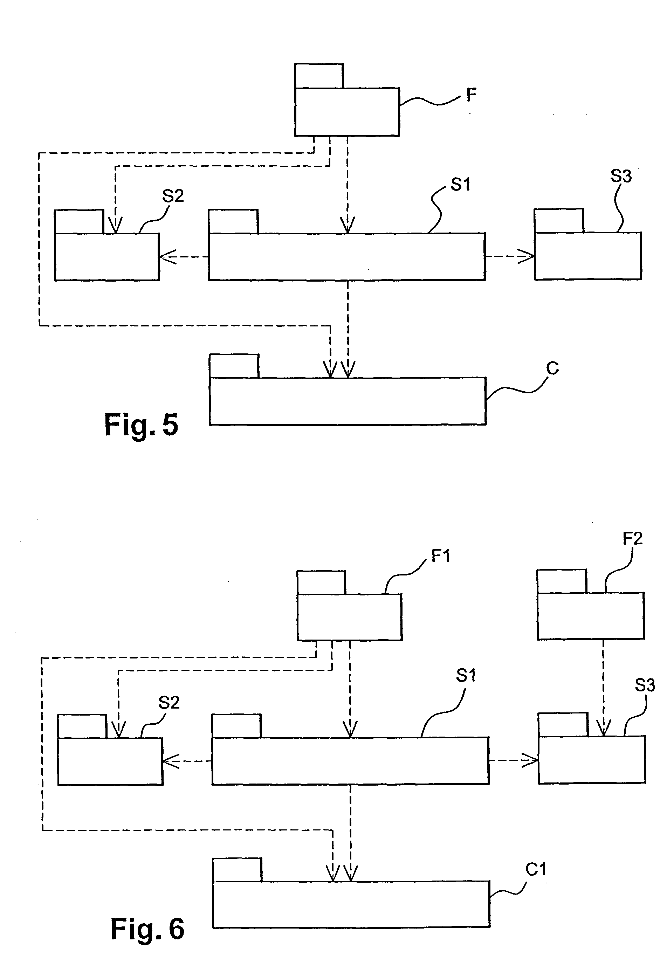

Ainsi, la définition d'un sens aux relations de dépendance entre catégories lié à la notion de référentiel selon le principe exposé ci-dessus, permet de compléter le diagramme de catégories de la figure 4 modélisant les données du SI pour obtenir le diagramme de la figure 5. Dans le SI de cet exemple, ce sont les applications de commande qui implémentent le lien entre le parc commercial d'un client et le client ainsi que son compte. Les relations de dépendance en question ont donc pour origine la catégorie S1 *Parc Commercial Client* et pour cible, respectivement les catégories S2 Client et S3 *Compte Client.* C'est donc l'application dont le gisement contient la donnée référentielle décrivant un client qui doit fournir cette donnée à l'application dont le gisement contient la donnée référentielle décrivant un parc commercial client. De même, c'est l'application dont le gisement contient la donnée référentielle décrivant un compte client qui doit fournir cette donnée à l'application dont le gisement contient la donnée référentielle décrivant un parc commercial client.

A l'appui des principes de modélisation UML définie dans la description ci-dessus en référence aux figures 1 à 5, la présente invention concerne également un procédé permettant de localiser les gisements de données référentielles.

Ce second aspect de l'invention est décrit en référence à la figure 6 illustrant un diagramme de catégories se rapportant à un SI constitué d'un progiciel de guichet, plus communément appelé progiciel de « front office » selon la terminologie anglo-saxonne, et d'un progiciel de facturation, qui implémentent respectivement des flux de commande et de facturation.

Le procédé de localisation selon la présente invention nécessite en entrée un diagramme de catégorie où toutes les relations de dépendance sont orientées à l'aide des principes précédemment définis. Le diagramme des catégories de la figure 6 est donc élaboré suivant les principes définis par la modélisation UML de données référentielles d'un SI selon la présente invention.
la définition des catégories du diagramme des catégories illustré à la figure 6 est la suivante :
Deux catégories de type flux F1 et F2 : intitulées respectivement *Commande* et *Facture*
Trois catégories de type stock S1, S2 et S3 : intitulées respectivement *Parc Commercial Client, Client et Compte Client*
Une catégorie de type codification C1 : *Catalogue* Commercial.

Pour ce qui est des relations de dépendance, la catégorie F1 est liée par des relations de dépendance aux catégories de type stock S1 et S2 et à la catégorie de type codification C1. Selon les principes gouvernant l'orientation des relations de dépendance vus plus haut, le sens de ces relations a pour origine la catégorie F1 et comme cible respectivement les catégories S1, S2 et C1.
la catégorie F2 est liée par une relation de dépendance à la catégorie de type stock S3. Selon les principes gouvernant l'orientation des relations de dépendance vus plus haut, le sens de cette relation a pour origine la catégorie F2 et comme cible la catégories S3.
la catégorie S1 est liée par deux relations de dépendance respectivement aux catégories de type stock S2 et S3. Selon les principes gouvernant l'orientation des relations de dépendance vus plus haut, le sens de ces relations a pour origine la catégorie S1 et comme cible respectivement les catégories S2 et S3.

Enfin, la catégorie S1 est liée par une relation de dépendance à la catégorie de type codification C1. Selon les principes gouvernant l'orientation des relations de dépendance vus plus haut, le sens de cette relation a pour origine la catégorie S1 et comme cible la catégories C1.

Afin de localiser les gisements de données référentielles correspondant à des concepts spécialisés qui appartiennent à une même catégorie, le procédé selon l'invention, se propose d'effectuer un parcours ordonné du diagramme des catégories, en partant des catégories de type flux vers les catégories de type codification.

La localisation des gisements de données référentielles, réalisée à l'appui d'un parcours ordonné tel que défini, est basé sur un algorithme mettant en oeuvre les étapes suivantes consistant à :
- pour chaque catégorie de type flux, réitérer les étapes suivantes :
   . localiser le gisement des données référentielles associé à ladite catégorie de type flux;
   . pour chaque catégorie de type stock, cible d'au moins une relation de dépendance d'origine ladite catégorie de type flux, réitérer les étapes suivantes consistant à : - localiser le gisement des données référentielles associé à ladite catégorie de type stock et donner la priorité au choix du gisement des données référentielles associé à ladite catégorie de type flux, et - pour toute autre catégorie de type stock, cible d'au moins une relation de dépendance d'origine ladite catégorie de type stock, localiser le gisement des données référentielles associé à ladite autre catégorie de type stock et donner la priorité au choix du gisement des données référentielles associé à ladite catégorie de type stock;
   . pour chaque catégorie de type codification cible d'au moins une relation de dépendance d'origine ladite catégorie de type flux, réitérer les étapes consistant à : - localiser le gisement des données référentielles associé à ladite catégorie de type codification et donner la priorité au choix du gisement des données référentielles associé à ladite catégorie de type flux;
- pour chaque catégorie de type stock, réitérer les étapes suivantes :
   . pour chaque catégorie de type codification cible d'au moins une relation de dépendance d'origine ladite catégorie de type stock, réitérer les étapes suivantes consistant à : - localiser le gisement des données référentielles associé à ladite catégorie de type codification et donner la priorité au choix du gisement des données référentielles associé à ladite catégorie de type stock, et - pour toute autre catégorie de type codification cible d'au moins une relation de dépendance d'origine ladite catégorie de type codification, localiser le gisement des données référentielles associé à ladite autre catégorie de type codification et donner la priorité au choix du gisement des données référentielles associé à ladite catégorie de type codification.

Les étapes de l'algorithme de localisation consistant à localiser le gisement des données référentielles associé à une catégorie consiste en fait à désigner sous la responsabilité de quelle application se trouve les données référentielles liées à cette catégorie.

Ainsi, en reprenant l'exemple de la figure 6, un parcours du diagramme des catégories pourrait être ordonné de la façon suivante :
1. catégorie F1 *Commande*
2. catégorie F2 *Facture*
3. catégorie S1 *Parc Commercial Client*
4. catégorie S2 *Client*
5. catégorie S3 *Compte client*
6. catégorie C *Catalogue Commercial*

Une localisation des gisements des données référentielles, réalisée à l'appui du parcours précédent et de l'algorithme tel que défini plus haut serait la suivante :
Pour les deux catégories de flux étudiées F1 et F2, du fait du paramètre fonctionnel des deux progiciels, il est immédiat d'associer le gisement des données référentielles lié à la catégorie F1 *Commande* au progiciel de front office et le gisement des données référentielles lié à la catégorie F2 *Facture* au progiciel de facturation ;
Le gisement des données référentielles lié à la catégorie F1 *Commande* étant le progiciel de front office, du fait des orientations des relations de dépendance telles que représentées à la figure 6, le gisement des données référentielles lié à la catégorie S1 *Parc Commercial Client* et celui lié à la catégorie S2 *Client* sont obligatoirement celui du progiciel de front office ;
Pour la même raison que précédemment, le gisement des données référentielles lié à la catégorie S3 *Compte Client* est celui du progiciel de facturation. Il est ainsi intéressant pour l'urbanisme de ce SI en création de noter que c'est le progiciel de facturation qui doit fournir au progiciel de front office le *Compte Client* et non le progiciel de front office qui doit fournir au progiciel de facturation le *Parc Commercial Client* ;
Le gisement des données référentielles lié à la catégorie F1 *Commande* étant le progiciel de front office, du fait des orientations des relations de dépendance telles que représentées à la figure 6, le gisement des données référentielles lié à la catégorie C1 *Catalogue Commercial* est celui du progiciel de front office.

Le procédé de modélisation UML des données référentielles d'un SI selon l'invention, construit à partir des principes définis plus hauts basés sur les données référentielles d'un SI, permet de créer ou de faire évoluer l'urbanisme d'un SI. Cette modélisation permet avantageusement de déterminer quelle application doit offrir, en plus de la donnée référentielle contenue dans son gisement de données, les relations entre cette donnée référentielle et les données référentielles d'autres gisements. Elle permet également pour de nouvelles données d'un SI de localiser les gisements de données référentielles. Cette localisation des gisements de données référentielles permet de déterminer dans quel gisement de données, c'est-à-dire sous la responsabilité de quelle application, doit se trouver une donnée référentielle. Ainsi, lors de la création d'un SI, la localisation proposée par l'invention permet avantageusement, lors de la phase d'urbanisme fonctionnel, de déterminer les applications dont le gisement de données contiendra une ou plusieurs données référentielles.

## Revendications

1. Procédé de modélisation de données référentielles d'un système d'information, **caractérisé en ce qu'**il repose sur une modélisation UML des données référentielles du système d'information répertoriées dans des gisements de données d'applications du système d'information, toute donnée référentielle du système d'information étant définie par un concept spécialisé héritant de caractéristiques d'un concept générique, ledit procédé comprenant les étapes suivantes consistant à :
- regrouper lesdits concepts en catégories selon des critères logiques ;
- construire un diagramme de catégories où lesdites catégories sont regroupées selon un typage prédéfini des catégories, lesdites catégories étant liées entre-elles par des relations de dépendance UML matérialisées chacune par une ou plusieurs données référentielles ;
- mettre en cohérence les regroupements de concepts génériques dans une même catégorie avec les gisements de données d'applications du système d'information en appliquant le principe suivant lequel les données référentielles définies par les concepts spécialisés héritant de concepts génériques d'une même catégorie et possédant une spécialisation identique appartiennent obligatoirement au gisement de données d'une unique application ;
- définir un sens pour les relations de dépendance UML liant lesdites catégories entre-elles, ledit sens des relations de dépendance UML dépendant d'une part, du typage des catégories et, d'autre part, du gisement de la donnée référentielle contenant la relation.

2. Procédé selon la revendication 1, **caractérisé en ce que** le regroupement des catégories selon un typage prédéfini consiste à définir des catégories liées à des flux (F) regroupant des concepts génériques et des concepts spécialisés qui ont un cycle de vie correspondant exactement à celui d'un processus, des catégories liées à des stocks (S) regroupant des concepts génériques et des concepts spécialisés qui changent d'état à la suite de l'activation d'un flux et qui ont un cycle de vie non limité à celui d'un processus, et des catégories de codification (C) regroupant des concepts génériques permettant de référencer des informations liées aux flux ou aux stocks.

3. Procédé selon la revendication 2, **caractérisé en ce qu'**une relation de dépendance UML entre une catégorie de type flux (F) et une catégorie de type stock (S1, S2) est orientée de la catégorie de type flux vers la catégorie de type stock.

4. Procédé selon la revendication 2 ou 3, **caractérisé en ce qu'**une relation de dépendance UML entre une catégorie de type flux (F) ou une catégorie de type stock (S1) et une catégorie de type codification (C) est orientée de la catégorie de type flux ou de type stock vers la catégorie de type codification.

5. Procédé selon l'une quelconque des revendications précédentes, selon lequel deux données référentielles sont en relation, ladite relation se traduisant par une relation de dépendance UML entre les catégories d'appartenance des deux concepts génériques dont les concepts spécialisés correspondant aux dites données référentielles héritent, ladite relation de dépendance UML est orientée en prenant pour origine la catégorie d'appartenance du concept générique correspondant à la donnée référentielle dont le gisement de données comprend la donnée référentielle contenant la relation entre lesdites deux données référentielles.

6. Procédé de localisation de gisements de données référentielles d'un système d'information, **caractérisé en ce qu'**il comprend une étape de mise en oeuvre d'une modélisation des données référentielles du système d'information selon l'une quelconque des revendications précédentes et **en ce qu'**il comprend les étapes suivantes consistant à : - effectuer un parcours ordonné du diagramme des catégories, et - localiser, pour chacune des catégorie, le gisement des données référentielles associé à ladite catégorie.

7. Procédé selon la revendication 6, prise en combinaison avec la revendication 2, **caractérisé en ce que** le parcours ordonné du diagramme est effectué des catégories de type flux vers les catégories de type codification.

8. Procédé selon la revendication 7, **caractérisé en ce qu'**il comprend les étapes suivantes consistant à :
- pour chaque catégorie de type flux (F1, F2), réitérer les étapes suivantes :
. localiser le gisement des données référentielles associé à ladite catégorie de type flux;
. pour chaque catégorie de type stock (S1, S2, S3) cible d'au moins une relation de dépendance d'origine ladite catégorie de type flux, réitérer les étapes suivantes consistant à : - localiser le gisement des données référentielles associé à ladite catégorie de type stock (S1) et donner la priorité au choix du gisement des données référentielles associé à ladite catégorie de type flux (F1), et - pour toute autre catégorie de type stock (S2, S3), cible d'au moins une relation de dépendance d'origine ladite catégorie de type stock (S1), localiser le gisement des données référentielles associé à ladite autre catégorie de type stock (S2, S3) et donner la priorité au choix du gisement des données référentielles associé à ladite catégorie de type stock (S1);
. pour chaque catégorie de type codification (C1) cible d'au moins une relation de dépendance d'origine ladite catégorie de type flux (F1), réitérer les étapes consistant à : - localiser le gisement des données référentielles associé à ladite catégorie de type codification (C1) et donner la priorité au choix du gisement des données référentielles associé à ladite catégorie de type flux (F1);
- pour chaque catégorie de type stock (S1, S2, S3), réitérer les étapes suivantes :
. pour chaque catégorie de type codification (C1) cible d'au moins une relation de dépendance d'origine ladite catégorie de type stock (S1), réitérer les étapes suivantes consistant à : - localiser le gisement des données référentielles associé à ladite catégorie de type codification (C1) et donner la priorité au choix du gisement des données référentielles associé à ladite catégorie de type stock (S, et - pour toute autre catégorie de type codification cible d'au moins une relation de dépendance d'origine ladite catégorie de type codification (C1), localiser le gisement des données référentielles associé à ladite autre catégorie de type codification et donner la priorité au choix du gisement des données référentielles associé à ladite catégorie de type codification (C1).

9. Procédé selon l'une quelconque des revendications 6 à 8, **caractérisé en ce que** l'étape consistant à localiser le gisement des données référentielles associé à une catégorie consiste à désigner sous la responsabilité de quelle application se trouve les données référentielles liées à ladite catégorie.
